# EUROPEAN PATENT APPLICATION

(11) **EP 4 776 310 A1**
(43) Date of publication of application: **15.07.2026**
(21) Application number: 24862455.3
(22) Date of filing: 25.07.2024
(51) Int. Cl.: H01B 5/00, B01J 23/648, B01J 35/60, B01J 37/00, B01J 37/08, H01B 1/02, H01B 13/00, H01M 4/86, H01M 4/90, H01M 4/92, H01M 8/10

(54) **CONDUCTIVE METAL OXIDE PARTICLE AND CATALYST PARTICLE FOR ELECTROCHEMICAL REACTION**

(30) Priority: 08.09.2023 JP 2023146287
(71) Applicant: CATALER CORPORATION, Kakegawa-shi, Shizuoka 437-1492 (JP); Hiroshima University, Higashihiroshima-shi Hiroshima 739-8511 (JP)
(72) Inventor: TAKANO, Aoi, Kakegawa-shi, Shizuoka 437-1492 (JP); KATAOKA, Mikihiro, Kakegawa-shi, Shizuoka 437-1492 (JP); OGI, Takashi, Higashihiroshima-shi, Hiroshima 739-8511 (JP); HIRANO, Tomoyuki, Higashihiroshima-shi, Hiroshima 739-8511 (JP)
(74) Representative: Ricker, Mathias
(86) International application number: PCT/JP2024/026647
(87) International publication number: WO 2025/052799

(57) **Abstract**

According to the present invention, a carrier for an electrode catalyst is conductive metal oxide particles having a specific surface area of 35 m²/g or more and a pore volume of a pore having a pore diameter of 20-100 nm of 0.25 mL/g or more, and the electrode catalyst is catalyst particles for electrochemical reaction in which catalyst noble metal particles are carried on the conductive metal oxide particles.

## Description

### FIELD

The present invention relates to conductive metal oxide particles and to catalyst particles for electrochemical reaction using the same.

### BACKGROUND

Research and development of fuel cells are underway with the aim of preventing air pollution, reducing greenhouse gas emissions and providing alternative energy to petroleum. Fuel cells are advantageous in that they are clean, have high energy density and do not require charging.

A fuel cell has a structure with, for example, an anode and a cathode disposed facing each other across an ion-exchange membrane, wherein supplying fuel (such as hydrogen) to the anode side and supplying an oxidizing agent (such as air) to the cathode side produces respective electrochemical reactions at each electrode, thereby generating electricity.

In a fuel cell, an electrode catalyst is used having a structure with catalytic noble metal particles supported on the surface of a conductive support, for example. Carbon black, which has excellent conductivity, is commonly used as a conductive support, while platinum (Pt), which has excellent catalytic activity, is commonly used as the catalytic noble metal particles.

However, when a fuel cell employing an electrode catalyst comprising a carbon black support is used for prolonged periods, the supported catalytic noble metal particles are shed off or become aggregated due to oxidative degradation of the carbon black, thus lowering the electric power generation performance. Several attempts have been proposed in the prior art to solve this problem.

PTL 1, for example, discloses the use of niobium (Nb)-doped tin oxide (SnO₂) nanoparticles as the support for the electrode catalyst. PTL 2 discloses an electrode catalyst support having a chain-like or clustered structure formed by metal oxide primary particles with sizes of 5 or larger and 100 nm or smaller being fused together. PTL 3 discloses using, as an electrode catalyst support, aggregates of metal oxide fine particles comprising linked sections wherein crystallites of size 10 or larger and 30 nm or smaller are fused together in a chain-like fashion, and gaps between them.

### [CITATION LIST]

### [PATENT LITERATURE]

[PTL 1] International Patent Publication No. WO2015/146454
[PTL 2] International Patent Publication No. WO2015/146454
[PTL 3] International Patent Publication No. WO2020/080400

### SUMMARY

### [TECHNICAL PROBLEM]

While the techniques described in PTLs 1 to 3 inhibit the oxidative degradation of electrode catalyst supports that occurs with prolonged use of fuel cells, the output of the fuel cells remains insufficient.

The present invention has been completed in light of the circumstances described above. It is an object of the invention to provide an electrode catalyst support that reduces the oxidative degradation that occurs with prolonged use and provides a fuel cell with high output, as well as an electrode catalyst using it.

### [SOLUTION TO PROBLEM]

The present invention may be summarized as follows.

### <Aspect 1>

Conductive metal oxide particles having a specific surface area of 35 m²/g or greater, and a pore volume of 0.25 mL/g or greater for pores with pore sizes of 20 nm or larger and 100 nm or smaller.

### <Aspect 2>

The conductive metal oxide particles according to aspect 1, wherein the primary particle size is 10 nm or larger and 30 nm or smaller.

### <Aspect 3>

The conductive metal oxide particles according to aspect 1, wherein the crystallite diameter is 10.0 nm or larger and 15.0 nm or smaller.

### <Aspect 4>

The conductive metal oxide particles according to aspect 1, wherein the macropore mode diameter is 15 nm or larger as measured with a mercury porosimeter.

### <Aspect 5>

The conductive metal oxide particles according to aspect 1, wherein the secondary particle size is 0.05 µm or larger and 5.0 µm or smaller.

### <Aspect 6>

The conductive metal oxide particles according to aspect 1, wherein the conductive metal oxide particles are tin oxide particles doped with one or more elements selected from among niobium, tantalum, tungsten, antimony and bismuth.

### <Aspect 7>

The conductive metal oxide particles according to aspect 6, wherein the conductive metal oxide particles are tin oxide particles doped with niobium.

### <Aspect 8>

Catalyst particles for electrochemical reaction, having catalytic noble metal particles supported on conductive metal oxide particles according to any one of aspects 1 to 7.

### <Aspect 9>

The catalyst particles for electrochemical reaction according to aspect 8, wherein the catalytic noble metal particles are platinum particles.

### <Aspect 10>

The catalyst particles for electrochemical reaction according to aspect 8, which are a fuel cell electrode catalyst.

### <Aspect 11>

The catalyst particles for electrochemical reaction according to aspect 10, which are an electrode catalyst for a cathode.

### <Aspect 12>

A fuel cell comprising catalyst particles for electrochemical reaction according to aspect 10.

### <Aspect 13>

A method for producing conductive metal oxide particles according to any one of aspects 1 to 7, the method comprising the following (A) and (B):
(A) drying an aqueous dispersion comprising a conductive metal oxide particle precursor having a specific surface area of 35 m²/g or greater and a pore volume of lower than 0.25 mL/g for pores with pore sizes of 20 nm or larger and 100 nm or smaller, and a pore-forming material, in an atomized state using a diffusion flame, to obtain aggregates of the conductive metal oxide particle precursor and the pore-forming material, and
(B) heating the aggregates to combust the pore-forming material.

### <Aspect 14>

The method for producing conductive metal oxide particles according to aspect 13, wherein the pore-forming material is one or more selected from among organic polymers, calcium carbonate and zinc oxide.

### <Aspect 15>

The method for producing conductive metal oxide particles according to aspect 13, which further comprises, prior to step (A),
(C) atomizing and combusting a solution of a metal atom-containing organic compound dissolved in an organic solvent, to obtain the conductive metal oxide particle precursor.

### [ADVANTAGEOUS EFFECTS OF INVENTION]

According to the invention, there are provided conductive metal oxide particles suitable as an electrode catalyst support that exhibits less of the oxidative degradation that occurs with prolonged use and that can provide a fuel cell with high output, as well as catalyst particles for electrochemical reaction suitable as an electrode catalyst.

### BRIEF DESCRIPTION OF DRAWINGS

Fig. 1 is a SEM image of the Pt/NTO particles obtained in Comparative Example 1.
Fig. 2(a) and (b) are SEM images of the Pt/porous NTO particles obtained in Example 2.

### DESCRIPTION OF EMBODIMENTS

### <Conductive metal oxide particles>

The conductive metal oxide particles of the invention are conductive metal oxide particles having a specific surface area of 35 m²/g or greater, and a pore volume of 0.25 mL/g or greater for pores with pore sizes of 20 nm or larger and 100 nm or smaller.

The metal oxide composing the conductive metal oxide particles may be selected from among metal oxides with conductivity or semiconductivity, or such metal oxides doped with specific impurity elements.

Examples of metal oxides with conductivity or semiconductivity include one or more selected from among TiO, VO, Ti₂O₃, V₂O₃, VO₂, NbO₂, CrO₂, MoO₂, WO₂, ReO₂, RuO₂, OsO₂, RhO₂, IrO₂, SnO₂, ReO₂, LaTiO₃, SrMoO₃, SrRuO₃ and LaRhO₃.

The impurity element to be doped may be one or more selected from among lithium (Li), niobium (Nb), tantalum (Ta), tungsten (W), antimony (Sb) and bismuth (Bi), for example, selected as appropriate, depending on the type of metal oxide with conductivity or semiconductivity. The doping amount of the impurity element may be 0.5 atomic percent or greater, 1.0 atomic percent or greater, 2.0 atomic percent or greater or 3.0 atomic percent or greater, and 10.0 atomic percent or less, 8.0 atomic percent or less, 6.0 atomic percent or less or 5.0 atomic percent or less, with 100 atomic percent as the total number of atoms of the metal element and impurity element in the metal oxide.

The conductive metal oxide particles of the invention may be particles of tin oxide (SnO₂) doped with one or more elements selected from among Nb, Ta, W, Sb and Bi, and especially particles of SnO₂ doped with Nb.

The conductive metal oxide particles of the invention are thought to be in the form of secondary particles that are porous and have a high specific surface area, due to aggregation of the primary particles which forms pores with pore sizes of 20 nm or larger and 100 nm or smaller (macropores) between the particles.

The specific surface area of the conductive metal oxide particles is 35 m²/g or greater. If this condition is satisfied, it will be possible to firmly anchor the catalytic noble metal particles to the conductive metal oxide particle surfaces when the catalytic noble metal particles are supported on the conductive metal oxide particles of the invention. When such support particles are applied to catalyst particles for electrochemical reaction, for example, it is possible that this inhibits the reduction in activity caused by migration and aggregation of the catalytic noble metal particles.

The specific surface area of the conductive metal oxide particles may be 35 m²/g or greater, 40 m²/g or greater, 45 m²/g or greater, 50 m²/g or greater, 55 m²/g or greater, 60 m²/g or greater, 65 m²/g or greater or 70 m²/g or greater, and 200 m²/g or less, 180 m²/g or less, 160 m²/g or less, 140 m²/g or less, 120 m²/g or less, 100 m²/g or less, 80 m²/g or less or 70 m²/g or less.

The specific surface area of the conductive metal oxide particles is measured by the BET method using nitrogen as the adsorbate.

The conductive metal oxide particles of the invention have a pore volume of 0.25 mL/g or greater for pores with pore sizes of 20 nm or larger and 100 nm or smaller (macropores). If this condition is satisfied, then when catalytic noble metal particles are supported on conductive metal oxide particles of the invention and applied onto catalyst particles for electrochemical reaction, for example, the reactants will circulate more easily within the particles and contact with the catalytic noble metal particles, thus allowing the catalytic action to be efficiently exhibited.

The pore volume of the macropores of the conductive metal oxide particles may be 0.25 mL/g or greater, 0.27 mL/g or greater, 0.30 mL/g or greater or 0.32 mL/g or greater, and 0.50 mL/g or less, 0.45 mL/g or less, 0.40 mL/g or less, 0.38 mL/g or less, 0.35 mL/g or less, 0.33 mL/g or less or 0.30 mL/g or less.

The pore volume of the macropores of the conductive metal oxide particles is measured as the cumulative pore volume in a pore size range of 20 or larger and 100 nm or smaller, in the pore distribution determined by mercury intrusion porosimetry using a mercury porosimeter. The pore size is calculated using the Washburn Formula. For this calculation, the surface tension of mercury is considered to be 480 dynes/cm, and the contact angle between mercury and the sample may be 140 degrees (°). The sample may be supplied for measurement after 4 hours of constant temperature drying at 120°C as pretreatment.

The conductive metal oxide particles of the invention may have a mode diameter of 15 nm or larger for pores with pore sizes of 20 nm or larger and 100 nm or smaller (macropores). If the macropore mode diameter is 15 nm or larger, then when catalytic noble metal particles are supported on conductive metal oxide particles of the invention and applied onto catalyst particles for electrochemical reaction, for example, the reactants will circulate more easily within the particles and contact with the catalytic noble metal particles, thus allowing the catalytic action to be efficiently exhibited.

The macropore mode diameter in the conductive metal oxide particles of the invention may be 15 nm or larger, 17 nm or larger, 20 nm or larger, 22 nm or larger or 25 nm or larger, and 50 nm or smaller, 45 nm or smaller, 40 nm or smaller, 35 nm or smaller, 30 nm or smaller or 25 nm or smaller.

The macropore mode diameter of the conductive metal oxide particles is measured as the pore size corresponding to the peak top in the pore distribution in a pore size range of 20 or larger and 100 nm or smaller, in the pore distribution determined by mercury intrusion porosimetry using a mercury porosimeter.

The secondary particle size of the conductive metal oxide particles of the invention may be set as appropriate for the purpose of use. However, the secondary particle size of the conductive metal oxide particles should not be excessively small in order to ensure a suitable macropore volume. In consideration of handleability during formation of the catalyst layer, on the other hand, the secondary particle size of the conductive metal oxide particles is also preferably not excessively large. From this viewpoint, the secondary particle size of the conductive metal oxide particles may be 0.05 µm or larger, 0.07 µm or larger, 0.1 µm or larger, 0.2 µm or larger, 0.3 µm or larger or 0.5 µm or larger, and 5.0 µm or smaller, 4.0 µm or smaller, 3.0 µm or smaller, 2.0 µm or smaller, 1.5 µm or smaller, 1.0 µm or smaller, 0.8 µm or smaller or 0.5 µm or smaller.

The secondary particle size of the conductive metal oxide particles is measured as the number-average value obtained by observation with an electron microscope.

The primary particle size of the conductive metal oxide particles of the invention, when manifesting as secondary particles, may be 10 nm or larger, 12 nm or larger, 15 nm or larger, 17 nm or larger or 20 nm or larger, and 30 nm or smaller, 25 nm or smaller, 23 nm or smaller, 20 nm or smaller, 18 nm or smaller or 15 nm or smaller, in order to form such macropores between the particles.

The primary particle size of the conductive metal oxide particles is measured as the number-average value obtained by observation with an electron microscope.

The crystallite diameter of the conductive metal oxide particles of the invention may be 10.0 nm or larger, 11.0 nm or larger, 12.0 nm or larger or 13.0 nm or larger, and 20 nm or smaller, 18 nm or smaller, 15 nm or smaller, 13 nm or smaller or 12.0 nm or smaller, in order to form primary particles as described above.

The crystallite diameters of the conductive metal oxide particles are calculated by the Scherrer equation, based on the results of XRD analysis of the conductive metal oxide particles.

The conductive metal oxide particles of the invention may have a structure in which secondary particles are linked in a clustered or chain-like fashion. The term "clustered" refers to a shape similar to a cluster of grapes, for example. The term "chain-like" means that the secondary particles are linked together forming a chain, ladder or web-like shape.

The conductive metal oxide particles of the invention do not necessarily need to be in the form of "a sheet of dried sardines" with the microparticles connected in a two-dimensional manner, or in the form of masses with the microparticles connected in a disordered three-dimensional manner.

### <Method for producing conductive metal oxide particles>

The conductive metal oxide particles of the invention may be produced by any method so long as the aforementioned conditions are satisfied.

The conductive metal oxide particles of the invention may be produced by a method comprising the following (A) and (B), for example:
(A) drying an aqueous dispersion comprising a conductive metal oxide particle precursor having a specific surface area of 35 m²/g or greater and a pore volume of lower than 0.25 mL/g for pores with pore sizes of 20 nm or larger and 100 nm or smaller, and a pore-forming material, in an atomized state using a diffusion flame, to obtain aggregates of the conductive metal oxide particle precursor and the pore-forming material (flame-assisted spray drying step), and
(B) heating the aggregates to combust the pore-forming material (heating step).

The method for producing conductive metal oxide particles of the invention, may also comprise, prior to the flame-assisted spray drying step (A):
(C) atomizing and combusting a solution of the metal atom-containing organic compound dissolved in an organic solvent, to obtain the conductive metal oxide particle precursor (spray flame combustion step).

Each of the steps in the method for producing the conductive metal oxide particles will now be explained in order.

### <(A) Flame-assisted spray drying step>

In the (A) flame-assisted spray drying step, the aqueous dispersion containing the conductive metal oxide particle precursor and pore-forming material is dried by a diffusion flame while in an atomized state, to obtain aggregates composed of the conductive metal oxide particle precursor and pore-forming material.

### (Conductive metal oxide particle precursor)

The conductive metal oxide particle precursor may consist of particles having a specific surface area of 35 m²/g or greater and a pore volume of less than 0.25 mL/g for pores with pore sizes of 20 nm or larger and 100 nm or smaller (macropores).

The specific surface area of the conductive metal oxide particle precursor may be the same as the desired specific surface area for the conductive metal oxide particles. The specific surface area of the conductive metal oxide particle precursor may therefore be 35 m²/g or greater, 40 m²/g or greater, 45 m²/g or greater, 50 m²/g or greater, 55 m²/g or greater, 60 m²/g or greater, 65 m²/g or greater or 70 m²/g or greater, and 200 m²/g or less, 180 m²/g or less, 160 m²/g or less, 140 m²/g or less, 120 m²/g or less, 100 m²/g or less, 80 m²/g or less or 70 m²/g or less.

In the method for producing conductive metal oxide particles of the invention, combustion of the pore-forming material forms pores with pore sizes of 20 nm or larger and 100 nm or smaller (macropores) in the conductive metal oxide particles, the pore volume being 0.25 mL/g or greater. The pore volume of the macropores of the conductive metal oxide particle precursor may therefore be smaller than the desired pore volume of the macropores in the conductive metal oxide particles. Thus, the pore volume of the macropores of the conductive metal oxide particle precursor may be less than 0.25 mL/g, 0.24 mL/g or less, 0.20 mL/g or less, 0.15 mL/g or less, 0.10 mL/g or less or 0.05 mL/g or less, or the conductive metal oxide particle precursor may even lack any macropores.

As mentioned above, the method for producing conductive metal oxide particles of the invention forms macropores in the conductive metal oxide particles by combustion of a pore-forming material. Therefore when the conductive metal oxide particle precursor has macropores, the mode diameter may be any appropriate value, regardless of the macropore mode diameter for the conductive metal oxide particles. The macropore mode diameter for the conductive metal oxide particle precursor may be 1.0 nm or larger and 20.0 nm or smaller.

In the method for producing conductive metal oxide particles of the invention, the primary particle size of the obtained conductive metal oxide particles will be either the same as or slightly larger than the primary particle size of the conductive metal oxide particle precursor. The primary particle size of the conductive metal oxide particle precursor may therefore be either the same as or slightly smaller than the desired primary particle size of the conductive metal oxide particles. The primary particle size of the conductive metal oxide particle precursor may be 5 nm or larger, 8 nm or larger, 10 nm or larger, 13 nm or larger or 15 nm or larger, and 25 nm or smaller, 23 nm or smaller, 20 nm or smaller, 18 nm or smaller, 15 nm or smaller or 10 nm or smaller.

In the method for producing conductive metal oxide particles of the invention, the crystallite diameter of the obtained conductive metal oxide particles will be either the same as or slightly larger than the crystallite diameter of the conductive metal oxide particle precursor. The crystallite diameter of the conductive metal oxide particle precursor may therefore be either the same as or slightly smaller than the desired crystallite diameter of the conductive metal oxide particles. The crystallite diameter of the conductive metal oxide particle precursor may be 8.0 nm or larger, 10.0 nm or larger or 12.0 nm or larger, and 18 nm or smaller, 15 nm or smaller, 13 nm or smaller, 12.0 nm or smaller or 10.0 nm or smaller.

The conductive metal oxide particle precursor may be in the form of secondary particles formed by aggregation of the primary particles having the primary particle size specified above. In this case, the secondary particle size of the conductive metal oxide particle precursor may be the same as the desired secondary particle size for the conductive metal oxide particles.

Such a conductive metal oxide particle precursor can be produced by the spray flame combustion step (C) described below, for example. The conductive metal oxide particle precursor used may be a commercial product satisfying the conditions mentioned above.

### (Pore-forming material)

The pore-forming material may be one or more selected from among organic polymers, calcium carbonate and zinc oxide.

Examples of organic polymers to compose the pore-forming material include acrylic polymers, aromatic polymers and acrylic/aromatic polymers, any one or more of which may be selected for use.

Examples of acrylic polymers include polymethyl methacrylate (PMMA);
examples of aromatic polymers include polystyrene; and
examples of acrylic/aromatic polymers include
styrene/acrylic copolymers.

The organic polymer as the pore-forming material may be either crosslinked or non-crosslinked.

The pore-forming material may be particulate. The particle size of the particulate pore-forming material may be 50 nm or larger, 100 nm or larger, 150 nm or larger, 200 nm or larger or 300 nm or larger, and 1,000 nm or smaller, 800 nm or smaller, 600 nm or smaller, 500 nm or smaller, 400 nm or smaller, 300 nm or smaller or 200 nm or smaller. According to the method for producing conductive metal oxide particles of the invention, using a pore-forming material with a particle size in the aforementioned range can yield conductive metal oxide particles with a pore volume of 0.25 mL/g or larger for macropores.

### (Aqueous dispersion)

The aqueous dispersion used in the flame-assisted spray drying step (A) comprises the aforementioned conductive metal oxide particle precursor and pore-forming material.

The solvent of the aqueous dispersion may be water or a mixed solvent of water and a water-soluble organic solvent, and will typically be water.

The amount of the conductive metal oxide particle precursor in the aqueous dispersion may be 0.1 mass% or greater, 0.2 mass% or greater or 0.5 mass% or greater, and 10.0 mass% or lower, 8.0 mass% or lower, 5.0 mass% or lower, 3.0 mass% or lower, 2.0 mass% or lower, 1.5 mass% or lower or 1.0 mass% or lower, with respect to the total amount of the aqueous dispersion.

The amount of the pore-forming material in the aqueous dispersion may be 50 parts by mass or greater, 100 parts by mass or greater, 150 parts by mass or greater, 200 parts by mass or greater, 250 parts by mass or greater or 300 parts by mass or greater, and 1,000 parts by mass or less, 800 parts by mass or less, 600 parts by mass or less, 500 parts by mass or less, 400 parts by mass or less or 300 parts by mass or less, with respect to 100 parts by mass of the conductive metal oxide particle precursor.

### (Flame-assisted spray drying)

In the flame-assisted spray drying step, the aqueous dispersion is dried by a diffusion flame while in an atomized state to obtain aggregates composed of the conductive metal oxide particle precursor and the pore-forming material.

The particle sizes of the water droplets composing the aqueous dispersion mist may be about 1 nm or larger and 6 nm or smaller. The concentration of the aqueous dispersion mist may be 1 mL/min or higher and 10 mL/min or lower, as the volume of water droplets per unit time.

A commercially available ultrasonic atomizer or heated atomizer may be used for atomization of the aqueous dispersion.

The atomized aqueous dispersion is carried into the diffusion flame by an appropriate carrier gas. The carrier gas may be an inert gas. By using an inert gas as the carrier gas, drying of the aqueous dispersion by heat of the diffusion flame proceeds in a mild manner, thus promoting self-organization between the conductive metal oxide particle precursor and the pore-forming material. From this viewpoint, the carrier gas may be nitrogen (N₂) or argon (Ar), for example. The flow rate of the carrier gas may be appropriately established by a person skilled in the art suitable for the scale of production.

A diffusion flame is a flame which is present at the interface between a separately provided combustible gas and oxidizing gas, the combustible gas and oxidizing gas consumed by combustion each being continuously supplied toward the flame by diffusion so that combustion is maintained.

The combustible gas composing the diffusion flame may be methane, ethane or propane, for example. The oxidizing gas may be oxygen or air, for example. The supply rate and ratio of the combustible gas and oxidizing gas may be appropriately established by a person skilled in the art according to the types of combustible gas and oxidizing gas and the production scale.

Carrying out "flame-assisted spray drying", whereby the atomized aqueous dispersion is dried with a diffusion flame, produces aggregates of the conductive metal oxide particle precursor and pore-forming material. The obtained aggregates may be collected with an appropriate bag filter, for example, and supplied to the subsequent heating step (B).

### <(B) Heating step>

In the heating step (B), the aggregates of the metal oxide particle precursor and pore-forming material which were obtained by the flame-assisted spray drying step (A) are heated. This causes combustion and burning off of the pore-forming material, resulting in formation of conductive metal oxide particles having the specified macropores.

The heating temperature in the heating step (B) may be a temperature that causes combustion when the pore-forming material is an organic polymer, or thermal decomposition when it is calcium carbonate, or volatilization when it is zinc oxide, such as 400°C or higher, 450°C or higher or 500°C or higher, for example. If the heating temperature is too high, on the other hand, sintering of the particles may occur, potentially resulting in "collapse" of the formed macropores. From this viewpoint, the heating temperature may be 1,000°C or lower, 900°C or lower, 800°C or lower, 700°C or lower, 600°C or lower or 550°C or lower. When an organic polymer is used as the pore-forming material, the heating temperature in the heating step (B) may be 400°C or higher and 800°C or lower, for example.

The heating time may be 10 minutes or longer, 20 minutes or longer, 30 minutes or longer, 40 minutes or longer, 45 minutes or longer or 1 hour or longer, and 6 hours or less, 4 hours or less, 3 hours or less, 2 hours or less, 1.5 hours or less or 1 hour or less.

The ambient atmosphere during the heating step (B) may be an inert atmosphere or oxidizing atmosphere, with air being sufficient in practice.

Conductive metal oxide particles of the invention are obtained in the manner described above. The obtained conductive metal oxide particles may be used directly, or after shredding and classification as necessary.

### <(C) Spray flame combustion step>

The spray flame combustion step (C) is an optional step for production of a conductive metal oxide particle precursor to be used in the flame-assisted spray drying step (A). The spray flame combustion step (C) may therefore be carried out before the flame-assisted spray drying step (A).

In the spray flame combustion step (C), a conductive metal oxide particle precursor is obtained by a method comprising:
dissolving a metal atom-containing organic compound in an organic solvent to obtain a metal atom-containing organic compound-containing solution, and
spraying the metal atom-containing organic compound-containing solution and causing combustion.

### (Metal atom-containing organic compound-containing solution)

The term "metal atom-containing organic compound" refers to a compound, salt or complex compound that comprises a metal atom, a carbon atom and a hydrogen atom, and optionally further comprises one or more atoms selected from among oxygen atoms, nitrogen atoms and sulfur atoms. The metal atom-containing organic compound of the invention does not need to contain a halogen atom or silicon atom.

The number of metal atoms per metal atom-containing organic compound may be one, two or more. However, the metal atom-containing organic compound will typically contain one metal atom for the purpose of the invention.

The metal atom-containing organic compound may be a metal atom-containing organic compound which is liquid at ordinary temperature (25°C) and ordinary pressure (1 atm). By using a metal atom-containing organic compound that is liquid at ordinary temperature and ordinary pressure, it is possible to accelerate decomposition of the metal atom-containing organic compound and inhibit deposition (solidification) of the metal atom-containing organic compound, to obtain homogeneous and nanosize particles of the conductive metal oxide particle precursor.

Metal atom-containing organic compounds that are liquid at ordinary temperature and ordinary pressure may be one or more selected from among metal alkoxides, metal organic acid salts and metal complexes, for example.

When the metal in the metal atom-containing organic compound is of two or more types, a metal atom-containing organic compound comprising two or more metals in the molecule may be used, or two or more metal atom-containing organic compounds each comprising one metal in the molecule may be used.

The metal in the metal atom-containing organic compound may be of the same type of metal as for the desired conductive metal oxide particles. The conductive metal oxide particles of the invention are preferably particles of tin oxide (SnO₂) doped with one or more elements selected from among Nb, Ta, W, Sb and Bi, and especially particles of SnO₂ doped with Nb. Therefore, the metals in the metal atom-containing organic compound in the spray flame combustion step (C) may include Sn and one or more selected from among Nb, Ta, W, Sb and Bi.

The metal atom-containing organic compound as the precursor for tin oxide (SnO₂) is most preferably a tin carboxylate. The tin in the tin carboxylate may be of valency II or valency IV. The number of carbon atoms of the alkylcarbonyloxy group in the tin carboxylate may be two or more, 4 or more, 6 or more or 8 or more, and 20 or less, 18 or less, 16 or less, 14 or less, 12 or less or 10 or less, including the carbonyl carbon. When the number of carbon atoms of the alkylcarbonyloxy group is 4 or more, the alkylcarbonyloxy group may be either linear or branched.

The metal atom-containing organic compound as the doping element precursor may be an alkoxide of a specified metal, for example. When the predetermined metal can adopt multiple stable oxidation numbers, the oxidation number of the metal in the metal alkoxide may be any of its stable oxidation numbers. The number of carbon atoms of the alkoxyl group in the alkoxide may be 1 or more, two or more, 3 or more or 4 or more, and 10 or less, 8 or less, 6 or less, 4 or less or 3 or less. When the number of carbon atoms of the alkoxyl group is 3 or more, the alkoxyl group may be linear or branched.

The conductive oxide particles of the invention are most preferably tin oxide particles doped with niobium. In this case, the metal atom-containing organic compound as the doping element precursor may be a niobium alkoxide and tin carboxylate, for example, and especially niobium(V) ethoxide and tin(II) 2-ethylhexanoate.

The mixing ratio of the tin oxide particle precursor and the doping element precursor in the metal atom-containing organic compound-containing solution may be the same as the desired tin:doping element ratio for the conductive oxide particles. The number of moles of the doping element with respect to the total number of moles of the tin and doping element may be 0.5 mol% or greater, 1 mol% or greater, 2 mol% or greater, 3 mol% or greater, 4 mol% or greater or 5 mol% or greater, and 10 mol% or lower, 8 mol% or lower, 6 mol% or lower or 5 mol% or lower, for example.

The solvent of the metal atom-containing organic compound-containing solution is an organic solvent. The organic solvent may be any one that can dissolve the metal atom-containing organic compound.

Specifically, the organic solvent used may be one or more selected from among aromatic compounds, aliphatic hydrocarbons, alcohols and polar organic solvents. Aromatic compounds include benzene, toluene, ethylbenzene, xylene, cumene and durene; aliphatic hydrocarbons include pentane, cyclopentane, hexane and cyclohexane; alcohols include methanol, ethanol, 2-propanol, n-butanol and benzyl alcohol; and polar organic solvents include tetrahydrofuran, acetonitrile and diethylhexanoic acid.

The organic solvent may also include one with high enthalpy of combustion. If the enthalpy of combustion of the solvent is high, the conductive oxide particle precursor and precious metal catalyst particle precursor will be instantly converted to the desired product during spray combustion of the precursor solution, which is preferred in order to reduce inconveniences such as deposition or aggregation of the precursor.

From the same viewpoint, the organic solvent may include a solvent having a high enthalpy of combustion of 3,000 kJ/mol or higher. The organic solvent used in the method of the invention may contain a solvent with a high enthalpy of combustion at 30 mass% or greater, 50 mass% or greater, 70 mass% or greater, 80 mass% or greater, 90 mass% or greater or 95 mass% or greater with respect to the total amount of the organic solvent, or the entire organic solvent may consist entirely of a high combustion enthalpy solvent.

The enthalpy of combustion of the high combustion enthalpy solvent may be 3,500 kJ/mol or higher, 4,000 kJ/mol or higher or 4,500 kJ/mol or higher, and 6,000 kJ/mol or lower, 5,500 kJ/mol or lower or 5,000 kJ/mol or lower. The solvent with a high enthalpy of combustion, having such a level of enthalpy of combustion, may be an aromatic compound or an aliphatic hydrocarbon.

The organic solvent for the metal atom-containing organic compound-containing solution may be an aromatic compound, and especially toluene, ethylbenzene or xylene.

The enthalpy of combustion, for the purpose of the invention, is the enthalpy of combustion of the liquid at 25°C.

The amount of organic solvent used in the metal atom-containing organic compound-containing solution may be an amount such that the concentration of the metal atom-containing organic compound in the metal atom-containing organic compound-containing solution is 0.05 mol/L or higher and 0.5 mol/L or lower.

### (Spray flame combustion step)

Next, the metal atom-containing organic compound-containing solution is subsequently atomized and combusted to obtain the desired conductive metal oxide particle precursor.

The combustion in the spray flame combustion step (C) may be carried out by flame spray pyrolysis (FSP). In flame spray pyrolysis, the metal atom-containing organic compound-containing solution that has been atomized by a diffusion gas stream is ignited by a spark to produce a flame. The flame that is produced is a spray flame produced from combustion of the metal atom-containing organic compound-containing solution that has been sprayed in an atomized mist. This spray combustion method using a spray flame differs from particle synthesis methods using diffusion flames in which starting material droplets are supplied to a previously formed flame for combustion.

The diffusion gas may be an oxidizing gas such as air or oxygen. The spark is not particularly restricted so long as the atomized metal atom-containing organic compound-containing solution can be ignited, and for example, it may be formed using methane, air or oxygen.

A conductive metal oxide particle precursor can be obtained by the spray flame combustion step (C) described above. The obtained conductive metal oxide particle precursor may be collected with an appropriate bag filter, and supplied to the flame-assisted spray drying step (A), either directly or after shredding and classification as necessary.

### <Catalyst particles for electrochemical reaction>

Another aspect of the invention provides catalyst particles for electrochemical reaction.

The catalyst particles for electrochemical reaction of the invention have a construction with catalytic noble metal particles supported on conductive metal oxide particles of the invention.

The catalytic noble metal particles may be particles of a platinum group metal, for example, and especially platinum particles or particles of an alloy of platinum with another metal. The other metal used may be selected from among nickel (Ni), cobalt (Co), ruthenium (Ru), manganese (Mn), titanium (Ti), tin (Sn) and yttrium (Y), for example.

The catalytic noble metal particles are particulate, with smaller particle sizes than the conductive metal oxide particles, and in a range of 1 nm or larger, 2 nm or larger, 3 nm or larger, 4 nm or larger or 5 nm or larger, and 20 nm or smaller, 15 nm or smaller, 10 nm or smaller, 8 nm or smaller, 7 nm or smaller or 6 nm or smaller.

The loading amount of the catalytic noble metal particles in the catalyst particles for electrochemical reaction may be 5 mass% or greater, 10 mass% or greater, 12 mass% or greater, 15 mass% or greater, 17 mass% or greater or 20 mass% or greater, and 30 mass% or lower, 28 mass% or lower, 25 mass% or lower, 23 mass% or lower or 20 mass% or lower, as the mass ratio of catalytic noble metal particles with respect to the total mass of the catalyst particles for electrochemical reaction.

The catalyst particles for electrochemical reaction of the invention are suitable as an electrode catalyst in a fuel cell, and are especially suitable as an electrode catalyst for a fuel cell cathode (air electrode).

### <Method for producing catalyst particles for electrochemical reaction>

The catalyst particles for electrochemical reaction of the invention may be produced by any method so long as they have the construction described above.

The catalyst particles for electrochemical reaction of the invention may be produced, for example, by a method comprising:
contacting the conductive metal oxide particles of the invention with a catalyst metal precursor, and
reducing the catalyst metal precursor and supporting the catalyst metal particles on the conductive metal oxide particles to obtain catalyst particles for electrochemical reaction.

The catalyst metal precursor used may be appropriately selected from among metal halides, sulfides, cyanides and complexes that are to compose the desired catalyst metal particles. When the catalyst metal particles are platinum particles, the catalyst metal precursor may be PtCl₂, PtCl₄, PtBr₂, PtS, Pt(CN)₂, PtCl₂(NH₃)₂ (dichlorodiammineplatinum) or hexahydroxoplatinum, for example.

Contact between the conductive metal oxide particles and catalyst metal precursor may be conducted in an appropriate solvent, for example. The solvent used may be selected from among solvents that can dissolve the catalyst metal precursor. For example, hydrochloric acid may be used when the catalyst metal particles are platinum particles and the catalyst metal precursor is PtCl₂, a hydrobromic acid aqueous solution may be used when the precursor is PtBr₂, a nitric acid aqueous solution may be used when the precursor is PtCl₂(NH₃)₂, water may be used when the precursor is PtCl₄, PtS or Pt(CN)₂, or an amine-containing solvent may be used when the precursor is hexahydroxoplatinum.

Reduction of the catalyst metal precursor may be carried out using an appropriate reducing agent. The reducing agent may be ethanol, formic acid, acetic acid, acetaldehyde, sodium borohydride or hydrazine, for example. The reduction may be carried out at a temperature of 10°C or higher and 100°C or lower, for a period of 0.5 hours or longer and 8 hours or less. The reduction temperature is preferably 10°C or higher and 50°C or lower when sodium borohydride is used as the reducing agent, and preferably 60°C or higher and 100°C or lower when ethanol, formic acid, acetic acid, acetaldehyde or hydrazine is used as the reducing agent.

This method produces catalyst particles for electrochemical reaction comprising catalyst metal particles supported on conductive metal oxide particles. The obtained catalyst particles for electrochemical reaction may be washed and dried if necessary, and further shredded and classified as necessary, before being supplied for use.

### <Fuel cell>

Yet another aspect of the invention provides a fuel cell. The fuel cell of the invention has an electrode comprising catalyst particles for electrochemical reaction of the invention.

The electrode comprising the catalyst particles for electrochemical reaction of the invention may be a cathode (air electrode). The cathode may have a suitable substrate layer and a catalyst layer on the substrate layer (cathode catalyst layer), with the cathode catalyst layer comprising catalyst particles for electrochemical reaction of the invention.

The substrate layer used may be a compound appropriately selected from among chemically and mechanically stable compounds with respect to the catalyst particles for electrochemical reaction and solvent, and that can withstand the heat treatment and pressurizing treatment that are preferably carried out to form the electrode. Specific examples include polyimide, polyethylene, polypropylene, polysulfone and polytetrafluoroethylene sheets.

The cathode catalyst layer comprises the catalyst particles for electrochemical reaction of the invention, and may further comprise an ionomer, and also optional components such as a binder. The ionomer may be NAFION^{R} (sulfonated tetrafluoroethylene (co)polymer), for example.

Such a cathode is constructed in the form of a fuel cell electrode assembly comprising a solid polymer electrolyte membrane and an anode (hydrogen electrode) stacked in that order on the cathode. The solid polymer electrolyte membrane and anode of the fuel cell electrode assembly may be a publicly known solid polymer electrolyte membrane and anode, respectively. The fuel cell electrode assembly can employ as the cathode an electrode comprising catalyst particles for electrochemical reaction according to the invention, or one produced by a publicly known method.

The fuel cell of the invention comprises the aforementioned fuel cell electrode assembly, and may also have, for example, an air channel or oxygen channel on the cathode side, and a fuel channel on the anode side. The fuel cell of the invention can employ as the cathode an electrode comprising catalyst particles for electrochemical reaction according to the invention, or one produced by a publicly known method.

### EXAMPLES

### <Comparative Example 1>

### (1) Preparation of NTO particles

Tin(II) 2-ethylhexanoate (Sn(C₈H₁₅O₂)₂) and niobium ethoxide (Nb(OC₂H₅)₅) were dissolved in xylene to a total concentration of 0.1 mol/L for Sn and Nb and an atomic ratio of Sn:Nb = 96:4, to prepare a precursor solution for NTO particles.

A syringe pump was used to supply the obtained precursor solution at a flow speed of 3 mL/min through an "AM6-type" two-fluid nozzle by Atomax. The precursor solution was atomized using an oxygen stream at a flow speed of 1.5 L/min, and ignited with a methane/air mixture spark using 1 L/min methane and 10 L/min air, forming a spray flame of the precursor solution, to synthesize tin Nb-doped tin oxide (NTO) particles for Comparative Example 1.

The generated NTO particles were collected using a bag filter by Horkos Corp.

### (2) Pt loading (preparation of Pt/NTO particles)

In 90 mL of purified water there was loaded 3.2 g of the obtained NTO particles as support particles, and a stirring blade was used for stirring at 250 rpm for 30 minutes to obtain a suspension. The stirred suspension was further stirred while slowly adding an amine solution of hexahydroxoplatinic acid containing platinum in an amount of 0.8 g in terms of metal, and upon completion of the dropwise addition, stirring was continued for 30 minutes. The solution was then heated while continuing stirring, and the liquid temperature was raised to 95°C and that temperature was maintained. A 40 mL portion of a 1 mol/L concentration aqueous formic acid solution was slowly added dropwise, and the liquid temperature of 95°C was maintained for another 5 minutes to reduce the platinum and load it onto the NTO particles.

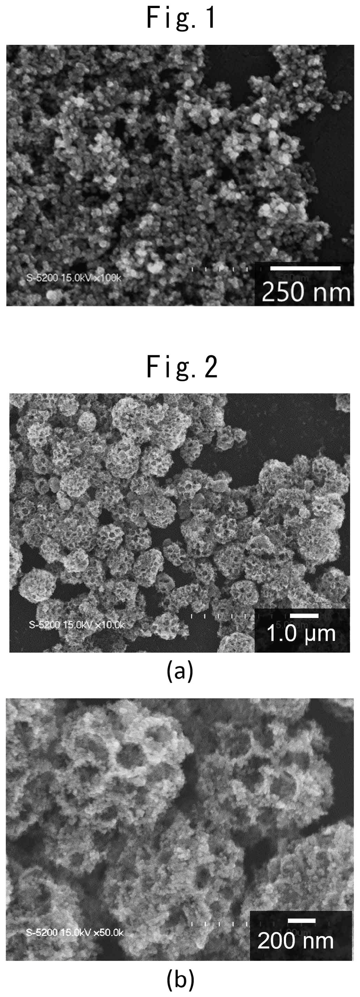

The particles were recovered from the reaction mixture by filtration and washed with purified water, and then dried at 80°C for 12 hours to obtain Pt/NTO particles for Comparative Example 1. Fig. 1 shows an SEM image of the Pt/porous NTO particles of Comparative Example 1. Referring to Fig. 1, the Pt/NTO particles of Comparative Example 1 had no distinct macropores and spread out in a connected manner in the form of a "sheet of dried sardines" without forming distinct particle shapes.

### <Comparative Example 2>

Pt/NTO particles for Comparative Example 2 were obtained by loading Pt in the same manner as Comparative Example 1, except that NTO particles obtained in the same manner as Comparative Example 1 were fired for 1 hour in air at 1,200°C and used as the support particles.

### <Comparative Example 3>

### (1) Preparation of NTO particles

Tin(II) chloride (SnCl₂) and niobium chloride (NbCl₅) were dissolved in ethanol to a total concentration of 0.1 mol/L for Sn and Nb and an atomic ratio of Sn:Nb = 96:4, to prepare a precursor solution of NTO particles.

The obtained precursor solution was converted to droplets using an ultrasonic nebulizer. The obtained droplets were conveyed by N₂ carrier gas and combusted and thermally decomposed by a methane/oxygen diffusion flame, to synthesize NTO particles for Comparative Example 3.

### (2) Pt loading (preparation of Pt/NTO particles)

Pt/NTO particles for Comparative Example 3 were obtained by loading Pt in the same manner as Comparative Example 1, except that the obtained NTO particles were used as the support particles.

### <Example 1>

### (1) Preparation of porous NTO particles

NTO particles (conductive oxide particle precursor) prepared in the same manner as Comparative Example 1 and spherical particles of poly(methyl methacrylate) (PMMA) with a particle size of 100 nm were dispersed in ultrapure water, to prepare an aqueous dispersion for production of porous NTO particles. The concentration of NTO particles in the aqueous dispersion was 1 mass% with respect to the total amount of the aqueous dispersion, and the amount of PMMA spherical particles added was 3 times the equivalent mass of the NTO particles.

The aqueous dispersion was introduced into an ultrasonic atomizer for atomization and supplied to a burner using a N₂ carrier gas at a flow rate of 3 L/min. A methane/oxygen diffusion flame using 0.5 L/min methane and 1.3 L/min oxygen was formed in the burner, and the atomized aqueous dispersion was dried by the diffusion flame further combusting a portion of the PMMA particles to form aggregates (flame-assisted spray drying method). The obtained aggregates were collected with a bag filter and heated in air at 500°C for 1 hour for complete combustion of the PMMA particles, to obtain porous NTO particles (conductive metal oxide particles) for Example 1.

### (2) Loading of Pt (preparation of Pt/porous NTO particles)

Pt/porous NTO particles for Example 1 were obtained by loading Pt in the same manner as Comparative Example 1, except that the obtained porous NTO particles were used as the support particles.

### <Example 2>

Pt/porous NTO particles for Example 2 were obtained in the same manner as Example 1, except that the particle size of the PMMA spherical particles was 300 nm, and the amount added was twice the equivalent mass of the NTO particles.

Fig. 2 shows an SEM image of the Pt/porous NTO particles of Example 2. Referring to Fig. 2, the Pt/porous NTO particles of Example 1 can be seen to have secondary particles with distinct macropores linked in a grape-cluster fashion.

### <Example 3>

Pt/porous NTO particles for Example 3 were obtained in the same manner as Example 2, except that the firing conditions for the dry aggregates were 1,000°C in air for 1 hour.

### <Analysis>

Analysis of the particles obtained in the Examples and Comparative Examples (NTO particles and Pt/NTO particles) was carried out by the following methods.

### <Pt particle size>

The particle size of the loaded Pt particles in the Pt/NTO particles was calculated by the Scherrer equation, based on XRD of the Pt/NTO particles.

### <Pt particle loading amount>

The loading amount of the Pt particles in the Pt/NTO particles was determined by calculation from the starting material charging amount. When the supernatant liquid of the reaction mixture obtained in the Pt loading step was subjected to high-frequency inductively coupled plasma (ICP) analysis, no Pt ion was detected in the liquid in any of the Examples or Comparative Examples.

### <Specific surface area of particles>

The specific surface area of the NTO particles was determined by the BET method with nitrogen as the adsorbate.

### <Primary particle size of NTO particles>

The primary particle size of the NTO particles was determined as the average value from a transmission microscope image.

### <Crystallite diameter of NTO particles>

The crystallite diameter of the NTO particles was calculated by the Scherrer equation, based on XRD.

### <Analysis of macropores in NTO particles>

The macropores in the NTO particles were analyzed by mercury intrusion porosimetry using an "AutoPore V (model 9620) pore distribution measuring apparatus by Micrometrics Instruments.

After constant temperature drying of the NTO particle sample at 120°C for 4 hours, the pore distribution measuring apparatus mentioned above was used to determine the pore distribution by mercury intrusion porosimetry. The pore size was calculated using the Washburn Formula. The cumulative pore volume for pore sizes in the range of 20 or larger and 100 nm or smaller was calculated from the obtained pore distribution, and recorded as the macropore volume. The surface tension of mercury was considered to be 480 dyne/cm, and a contact angle of 140° was used between the mercury and the sample.

The pore size corresponding to the peak top in the pore distribution for pores with pore sizes in the range of 20 or larger and 100 nm or smaller obtained as described above was recorded as the macropore mode diameter.

### <Electrochemical measurement (maximum current density and efficiency point voltage)>

The Pt/NTO particles obtained in the Examples and Comparative Examples were used to fabricate a membrane electrode assembly (MEA) and provided for electrochemical measurement. The Pt/NTO particles were pulverized with a mortar and then supplied for MEA fabrication.

### (1) Fabrication of MEA (Membrane Electrode Assembly)

After dispersing 800 mg of Pt/NTO particles in a mixed solvent comprising 1.25 g of purified water and 1.0 g of absolute ethanol, a Nafion^{R} dispersion (10 mass% content) was further added to obtain a mixture. The amount of Nafion^{R} dispersion added was 0.175 equivalents with respect to the mass of the NTO particles. The obtained mixture was ultrasonically dispersed for 10 hours in a water bath.

The ultrasonically dispersed mixture was coated onto a TEFLON^{R} sheet and the solvent was evaporated off to form a Pt/NTO particle-containing catalyst layer (cathode catalyst layer) on the sheet. The Pt density per unit area of the catalyst layer was 0.1 mg/cm².

A hydrogen electrode catalyst layer was formed on a sheet in the same manner as described above, except that instead of Pt/NTO particles, Pt was loaded at 20 mass% on Ketjen black. The Pt density per unit area of the catalyst layer was 0.1 mg/cm², similar to the cathode catalyst layer.

The TEFLON^{R} sheet having the cathode catalyst layer and anode side catalyst layer obtained as described above was laminated onto both sides of a polymer electrolyte membrane, with the catalyst layer-formed sides facing each other, and transferred by a hot press. The TEFLON^{R} sheet was then released and a diffusion layer was placed on the surface of each catalyst layer to obtain an MEA having an air diffusion layer, a cathode catalyst layer, a polymer electrolyte membrane, an anode side catalyst layer and a hydrogen diffusion layer laminated in that order.

### (2) Electrochemical measurement

The obtained MEA was then set in a single cell for electrochemical measurement and connected to a commercially available fuel cell evaluating device. While air was supplied to the cathode side at 1.0 L/min in an environment with a cell temperature of 80°C and a relative humidity of 100%, and hydrogen was supplied to the anode side at 0.5 L/min, the voltage was swept from 1.0 V to 0 V in the cathodic direction at a sweep rate of 10 mV/sec, to obtain an IV curve.

From the obtained IV curve, the maximum current value was recorded as the maximum current density, and the voltage with a current density of 0.5 A/cm² was recorded as the efficiency point voltage. The MEA produced using the Pt/NTO particles of Comparative Example 3 had excessively low catalyst performance, and the value of the efficiency point voltage could not be measured.

The results are summarized in Table 1 and Table 2.

### [Table 1]

**Table 1**

| | Synthesis of NTO particles | Pore-forming material | | Synthesis of porous NTO particles |
|---|---|---|---|---|
| | | Type | Particle size (nm) | |
| Comp. Example 1 | Flame spray pyrolysis | - | - | - |
| Comp. Example 2 | Flame spray pyrolysis + 1200°C firing | - | - | - |
| Comp. Example 3 | Diffusion flame method | - | - | - |
| Example 1 | Flame spray pyrolysis | PMMA | 100 | Flame-assisted spray drying + 500°C firing |
| Example 2 | Flame spray pyrolysis | PMMA | 300 | Flame-assisted spray drying + 500°C firing |
| Example 3 | Flame spray pyrolysis | PMMA | 300 | Flame-assisted spray drying + 1000°C firing |

### [Table 2]

**Table 2**

| | Loaded Pt particles | | NTO particles | | | | | Electrochemical measurement | |
|---|---|---|---|---|---|---|---|---|---|
| | Loading density (mass%) | Particle size (nm) | Specific surface area (m²/g) | Primary particle size (nm) | Crystallite diameter (nm) | Macropore mode diameter (nm) | Macropore volume (mL/g) | Maximum current density (A/cm²) | Efficiency point voltage (V) |
| Comp. Example 1 | 20.0 | 4.4 | 87 | 9 | 9.8 | 11 | 0.24 | 1.33 | 0.68 |
| Comp. Example 2 | 20.0 | 5.5 | 30 | 35 | 19.8 | 45 | 0.31 | 2.04 | 0.54 |
| Comp. Example 3 | 20.0 | 4.8 | 23 | 40 | 29.6 | 22 | 0.14 | 0.69 | - |
| Example 1 | 20.0 | 5.3 | 79 | 11 | 10.8 | 17 | 0.31 | 1.67 | 0.62 |
| Example 2 | 20.0 | 5.5 | 70 | 12 | 10.1 | 22 | 0.29 | 2.11 | 0.68 |
| Example 3 | 20.0 | 5.4 | 41 | 25 | 13.7 | 32 | 0.35 | 1.94 | 0.60 |

The following conclusions may be drawn from Table 1 and Table 2.

When Pt/NTO particles were used as the electrode catalyst at the cathode side of the fuel cell, both the maximum current density and efficiency point voltage were inadequate with the Pt/NTO particles of Comparative Examples 1 and 3 which had low macropore volume in the NTO particle supports. With the Pt/NTO particles of Comparative Example 2 which had a large macropore volume for the NTO particle support but a small specific surface area, the maximum current density was a high value but the efficiency point voltage was inadequate.

In contrast, when using the Pt/NTO particles of Examples 1 to 3 in the range of the present invention, which had large macropore volumes for the NTO particle supports and large specific surface areas, high values were exhibited for both the maximum current density and efficiency point voltage.

This is attributed to the large macropore volume of the NTO particle supports, and to the large specific surface areas. That is, a large macropore volume of the NTO particle support allows H₂O produced by electric power generation by the fuel cell to be easily discharged from the catalyst layer. Presumably, therefore, high diffusibility of gas in the catalyst layer is maintained, resulting in a high maximum current density value. A large specific surface area of the NTO particle support also inhibits aggregation of the supported Pt particles. It is possible that a large ECSA (electrochemical surface area) of the catalytic noble metal particles is thus maintained, resulting in a high value for the efficiency point voltage.

It is believed that this combination results in the efficient electrode catalyst action by the electrode catalyst of the invention.

## Claims

1. Conductive metal oxide particles having a specific surface area of 35 m²/g or greater, and a pore volume of 0.25 mL/g or greater for pores with pore sizes of 20 nm or larger and 100 nm or smaller.

2. The conductive metal oxide particles according to claim 1, wherein the primary particle size is 10 nm or larger and 30 nm or smaller.

3. The conductive metal oxide particles according to claim 1, wherein the crystallite diameter is 10.0 nm or larger and 15.0 nm or smaller.

4. The conductive metal oxide particles according to claim 1, wherein the macropore mode diameter is 15 nm or larger as measured with a mercury porosimeter.

5. The conductive metal oxide particles according to claim 1, wherein the secondary particle size is 0.05 µm or larger and 5.0 µm or smaller.

6. The conductive metal oxide particles according to claim 1, wherein the conductive metal oxide particles are tin oxide particles doped with one or more elements selected from among niobium, tantalum, tungsten, antimony and bismuth.

7. The conductive metal oxide particles according to claim 6, wherein the conductive metal oxide particles are tin oxide particles doped with niobium.

8. Catalyst particles for electrochemical reaction, having catalytic noble metal particles supported on conductive metal oxide particles according to any one of claims 1 to 7.

9. The catalyst particles for electrochemical reaction according to claim 8, wherein the catalytic noble metal particles are platinum particles.

10. The catalyst particles for electrochemical reaction according to claim 8, which are a fuel cell electrode catalyst.

11. The catalyst particles for electrochemical reaction according to claim 10, which are an electrode catalyst for a cathode.

12. A fuel cell comprising catalyst particles for electrochemical reaction according to claim 10.

13. A method for producing conductive metal oxide particles according to any one of claims 1 to 7, the method comprising the following (A) and (B):
(A) drying an aqueous dispersion comprising a conductive metal oxide particle precursor having a specific surface area of 35 m²/g or greater and a pore volume of lower than 0.25 mL/g for pores with pore sizes of 20 nm or larger and 100 nm or smaller, and a pore-forming material, in an atomized state using a diffusion flame, to obtain aggregates of the conductive metal oxide particle precursor and the pore-forming material, and
(B) heating the aggregates to combust the pore-forming material.

14. The method for producing conductive metal oxide particles according to claim 13, wherein the pore-forming material is one or more selected from among organic polymers, calcium carbonate and zinc oxide.

15. The method for producing conductive metal oxide particles according to claim 13, which further comprises, prior to step (A),
(C) atomizing and combusting a solution of a metal atom-containing organic compound dissolved in an organic solvent, to obtain the conductive metal oxide particle precursor.
